# EUROPÄISCHE PATENTSCHRIFT

(11) **EP 2 870 849 B1**
(45) Veröffentlichungstag und Bekanntmachung des Hinweises auf die Patenterteilung: **28.06.2017**
(21) Anmeldenummer: 14401104.6
(22) Anmeldetag: 31.10.2014
(51) Int. Cl.: A01C 21/00, A01C 17/00

(54) **Verfahren zur Generierung von Einstellparametern**
Method for generating setting parameters
Procédé destiné à générer des paramètres de réglage

(30) Priorität: 07.11.2013 DE 102013112247
(43) Veröffentlichungstag der Anmeldung: 13.05.2015
(73) Patentinhaber: Amazonen-Werke H. Dreyer GmbH & Co. KG, 49205 Hasbergen (DE)
(72) Erfinder: Fröschle, Heike, 49124 Georgsmarienhütte (DE); Resch, Rainer, 49170 Hagen a TW (DE)

(56) Entgegenhaltungen:
- WO-A1-2009/017027
- DE-A1-102005 002 437
- US-A1- 2004 024 510

## Beschreibung

Die Erfindung betrifft ein Verfahren zur Generierung von Einstellparametern gemäß des Oberbegriffes des Patentanspruches 1.

Ein ähnliches Verfahren zur Generierung von Einstellparametern ist in der DE 10 2005 002 437 A1 beschrieben. Bei diesem Verfahren werden durch Eingabe einer Codierung über eine Dateneingabeeinrichtung in die Datenverarbeitungseinheit entsprechende in einer Datenbank hinterlegte Empfehlungen für Einstellparameter aufgerufen.

Dieses sind für ein zu verteilendes Material von dem Maschinenhersteller ermittelte allgemein gültige Einstellparameter.

Der Erfindung liegt die Aufgabe zugrunde, eine verbesserte für Landwirtschaftsbetrieben und/oder den jeweiligen Materialien und Herstellern und/oder Händlern direkt zugeordnete Einstellparameter in einer Datenbank zu hinterlegen und zu Abrufen bereit zu stellen.

Diese Aufgabe wird erfindungsgemäß dadurch gelöst, dass die Datenverarbeitungseinheit sich über die Ferndatenübertragungseinrichtung mittels einer User-ID in die Datenbank einloggt, dass in der Datenbank mit der User-ID versehene Einstellparameter für ein oder mehrere auszubringende Materialen hinterlegt sind, und dass auf der Anzeigevorrichtung die mit der abfragenden User-ID hinterlegten Materialien und/oder die zugehörigen Einstellparameter angezeigt werden.

Infolge dieser Maßnahmen fließen die bei den jeweiligen Usern auftretenden und zu berücksichtigen Besonderheiten in die Einstellparameter ein. Hierdurch ergeben sich durch die individuellen Eigenheiten berücksichtigen Einstellparameter für den Zentrifugalstreuer besonders gute Verteilergebnisse für das verteilte Material, wie beispielsweise Düngemittel.

Um in einfacher Weise Hinweise auch bei keinen User speifischen Einstellparametern hinterlegten Daten zu erhalten, ist vorgesehen, dass bei Nichtvorhandensein von mit User-ID versehenen Einstellparametern von der externen Datenbank Einstellparameter für vergleichbare und/oder ähnliche zu verteilende Materialien auf der Anzeigevorrichtung angezeigt und zur Übernahme angeboten werden und durch Bestätigung durch den Bediener über die Ferndatenübertragungseinrichtung auf die Datenverarbeitungseinheit übernehmbar sind.

Eine einfache Einstellung der Verteilmaschine wird dadurch erreicht, dass mittels der übermittelten Einstellparameter die Dosier- und/oder Verteilorganen des Zentrifugalstreuers automatisch von der Datenverarbeitungseinheit vorzugsweise durch Aktivierung der den Dosier- und/oder Verteilorganen zugeordneten Aktoren einstellbar sind.

Weitere Einzelheiten der Erfindung sind der Beispielsbeschreibung zu entnehmen.

Die Zeichnungen zeigen
- Fig.1: das Abfrage- und Ablaufdiagramm zur Vorabfrage nach oder beim Kauf eines Düngemittels in Prinzipdarstellung,
- Fig.2: das Abfrage- und Ablaufdiagramm mit der regulären Parametergenerierung zur automatischen Einstellung in Prinzipdarstellung und
- Fig.3: das Abfrage- und Ablaufdiagramm mit Such- Parametergenerierung (auf gut Glück) in Prinzipdarstellung und
- Fig.4: Gesamtübersicht der Optionen zur Parametergenerierung.

Das erfindungsgemäße Verfahren dient zur Parametergenerierung und automatischen Einstellung eines Zentrifugalstreuers mit zwei gegensinnig rotierenden und mit Wurfschaufeln besetzten Schleuderscheiben zur Ausbringung von landwirtschaftlichem Material, insbesondere körnige Düngemittel. Den Schleuderscheiben sind die auszubringenden Materialien in einstellbaren Mengen zuzuführen. Häufig sind die Dosierorgane zur Verstellung und Verlagerung der Aufgabefläche des Materials gegenüber den Schleuderscheiben vorzugsweise mittels Aktoren durch die Datenverarbeitungseinrichtung, beispielsweise einem Bordrechner zu verstellen.

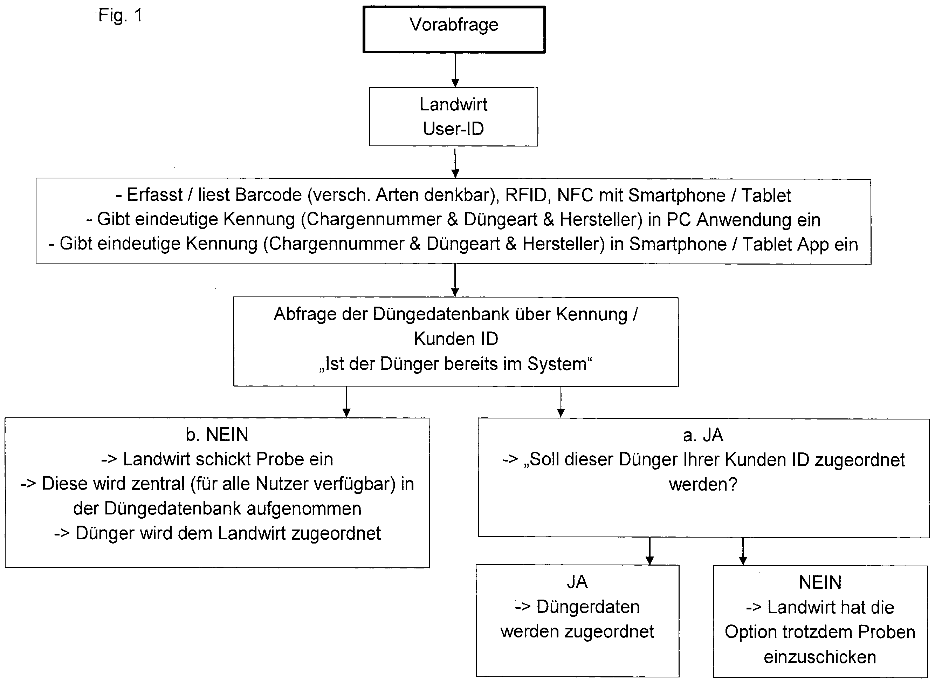

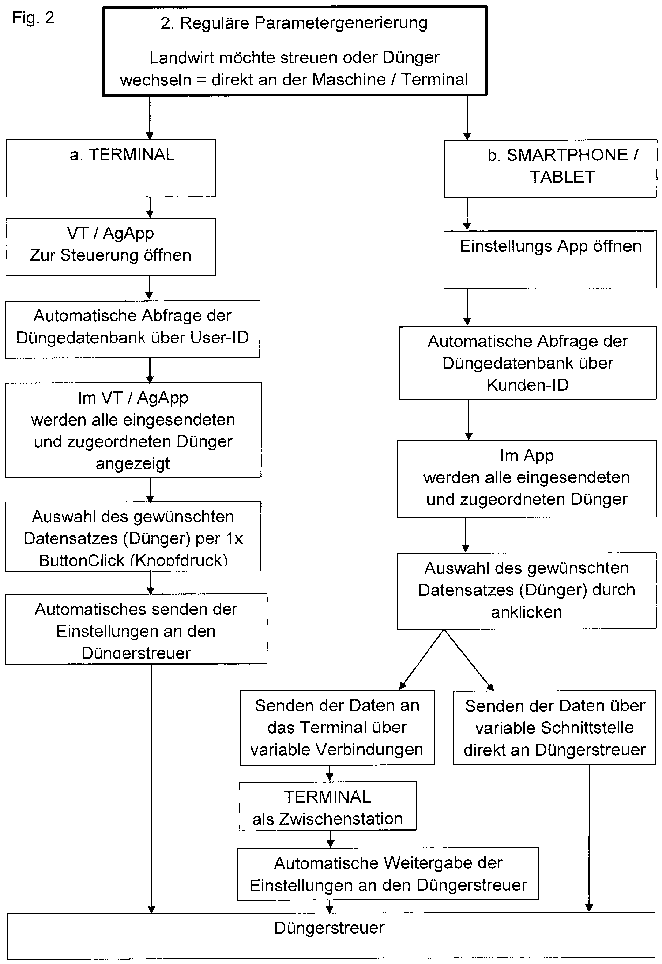

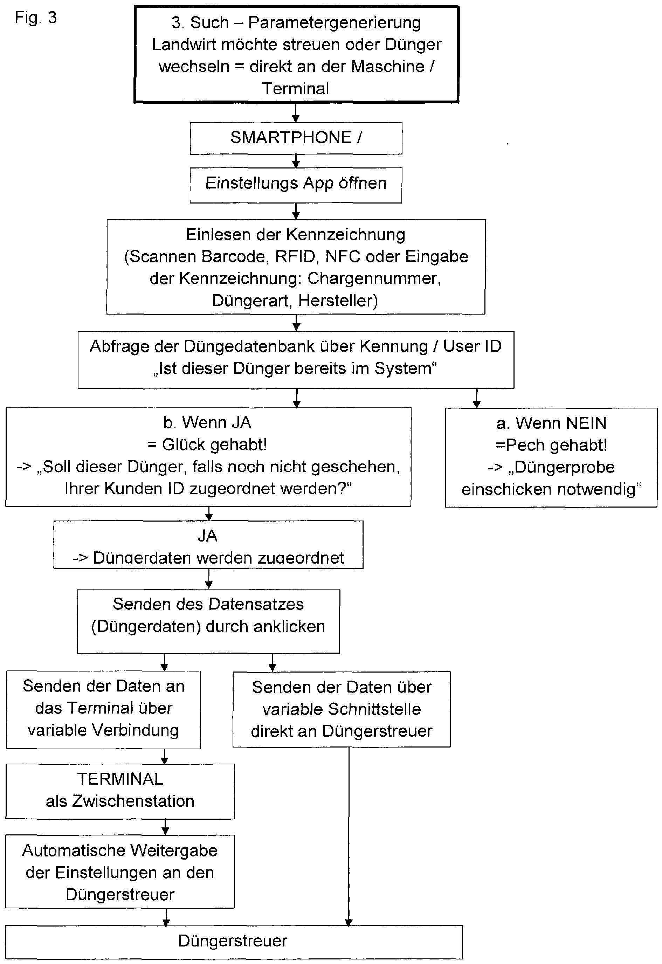

Für das Generieren der Einstellparameter und für die Einstellung des Düngestreuers sind mehrere Wege vorgesehen. Die Fällen 2 und 3 gemäß den Fig.2 und 3 beziehen sich auf eine Einstellung anhand verschiedener Eingabemedien (Tablet / Smartphone / Terminal) direkt an der Maschine, bei Erstbefüllung oder Düngerwechsel an der Maschine. Der Fall 1 gemäß Fig. 1 bezieht sich auf eine vorhergehende Planungsabfrage am Planungs PC / Tablet / Smartphone bei oder nach dem Kauf des Düngemittels um die Verfügbarkeit der zukünftigen Einstelldaten sicherzustellen.

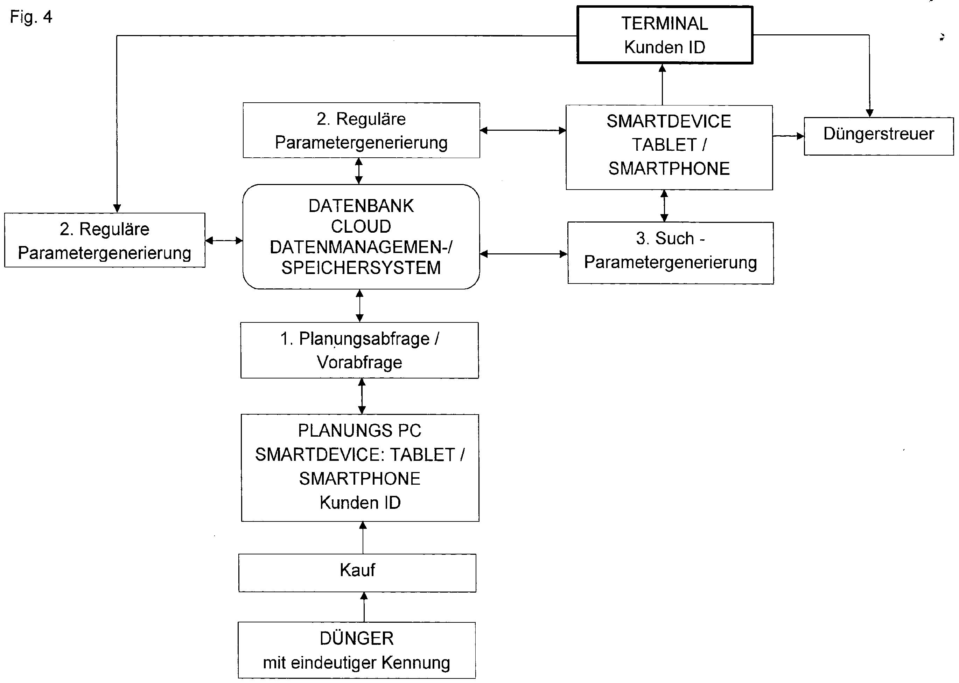

In allen Fällen ist das Vorhandensein einer eindeutigen und unveränderlichen Kunden ID zur Identifizierung des Landwirts / Kunden und eine Form eines Datenmanagementsystems / Datenspeicher- oder Verwaltungssystems (im speziellen einer Cloud oder Datenbank) Voraussetzung, wie Fig. 4 zeigt.
1. Im Falle der Vorabfrage gemäß Fig.1 nach oder beim Kauf eines Düngemittels erfolgt die Identifizierung wahlweise über das Erfassen / Einlesen eines Barcodes, das Lesen eines RFID Tags oder über NFC mittels eines Smartdevice:
   Smartphones oder Tablets, oder die Eingabe einer eindeutigen Kennung (z.B. Chargennummer, Düngerart und Düngerhersteller) in eine PC Anwendung oder in eine auf einem Tablet oder Smartphone vorhandene App Anwendung. Im Anschluss erfolgt eine Präsenzabfrage des Düngemittels im Speicher-/Datenmedium / der Datenbank oder Cloud. ("Ist dieser Dünger im System vorhanden?").
      a. Ist dies nicht der Fall, wird die vom Landwirt dann eingesendete Düngerprobe zentral = für alle Nutzer verfügbar in die Datenbank eingepflegt und die Einstellparameter dem Landwirt über die unveränderliche Kunden ID zugeordnet.
      b. Ist der Dünger bereits vorhanden, kann der Landwirt zunächst entscheiden ob er nach a. verfährt und trotzdem eine eigene Probe einschickt, oder ob er sich die vorhanden Einstellparameter automatisch über die unveränderliche Kunden ID zuordnen lässt.
2. Eine reguläre Parametergenerierung, wie in Fig.2 dargestellt, zur automatischen Einstellung erfolgt durch den Landwirt direkt am Düngerstreuer bei Erstbefüllung oder Wechsel des Düngemittels. Als Eingabemedium ist a. ein Terminal oder b. ein Smartdevice (Smartphone / Tablet) möglich.
   a. Bei der Parametergenerierung per Teminal erfolgt über ein auf dem Gerät installiertes AgApp oder durch Nutzung eines VT. Bei Auswahl der Anwendung erfolgt eine automatische Abfrage des Datenmanagement-oder speichersystems (Datenbank / Cloud) unter Verwendung der unveränderlichen KundenID. Dem Landwirt werden daraufhin in dieser Anwendung "seine" d.h. die von Ihm eingeschickten oder Ihm zugeordneten Dünger angezeigt. Per Knopfdruck erfolgt dann die Auswahl des gewünschten Düngers / Datensatzes / der Einstellparameter, welche automatisch an den Jobrechner des Streuers weitergegeben und von diesem übernommen werden (stellt sich gemäß dessen ein).
   b. Bei der Parametergenerierung über ein Smartdevice (Tablet / Smartphone) muss zunächst das EinstellungsApp geöffnet werden. Dabei erfolgt vollautomatisch oder per Knopfdruck eine Abfrage des Datenmanagement-oder speichersystems (Datenbank / Cloud) unter Verwendung der unveränderlichen KundenID. Im App werden analog zu a. dem Landwirt "seine" d.h. die von Ihm eingeschickten oder Ihm zugeordneten Dünger angezeigt. Die Auswahl des gewünschten Datensatzes erfolgt durch Anklicken innerhalb der Anwendung. Die Daten werden im Anschluss entweder
      → Über eine Schnittstelle an das Maschinenterminal und von dort analog zu a. an den Streuer weitergegeben = dieser stellt sich anhand der Parameter automatisch ein
      → Über eine Schnittstelle direkt an den Jobrechner des Düngerstreuers gesendet = dieser stellt sich anhand der Parameter automatisch ein.
3. Bei einer Such - Parametergenerierung ("auf gut Glück"), wie in Fig.3 dargestellt, hat der Landwirt den gewünschten Dünger bereits in die Maschine eingefüllt, hat jedoch keine Düngerprobe eingeschickt und fragt ab, ob der von Ihm gewählte Dünger und dessen Einstellparameter "per Zufall" schon im Datenmanagement- oder speichersystems (Datenbank / Cloud) vorhanden sind. Hierzu muss im Smartdevice (Tablet/Smartphone) zunächst die AnwendungsApp geöffnet und die Düngerkennzeichnung durch Einlesen /Scannen des Barcodes, lesen des RFID Tags, NFC oder über manuelle Eingabe der Kennzeichnung (z.B. Chargennummer, Düngerart, Hersteller) eingegeben werden. Danach erfolgt ein Abgleich mit den in der Datenmanagement- oder speichersystems (Datenbank / Cloud) vorhandenen Düngerarten anhand der übermittelten Parameter.
   a. Der Dünger/ die Charge ist nicht vorhanden - der Landwirt erhält die Meldung "Es muss eine Probe eingesendet werden". Es ist dann keine automatische Einstellung möglich
   b. Der Dünger ist als vorhanden identifiziert. Es erfolgt die Nachfrage und Bestätigung der Zuordnung der Düngerdaten / Einstellparameter über die unveränderliche KundenID zum abfragenden Landwirt. Die gewählten Daten werden dem Landwirt angezeigt und durch Anklicken an die Maschine weitergegeben:
      → Die Daten werden über eine drahtlose Verbindung / Schnittstelle an das Terminal und von dort aus an den Düngerstreuer / Jobrechner weitergegeben. Dieser stellt sich anhand der übermittelten Parameter automatisch ein.
      → Die Einstellparameter werden direkt über eine Schnittstelle an den Jobrechner des Düngerstreuers weitergegeben. Dieser stellt sich anhand der übermittelten Parameter automatisch ein.

In Fig. 4 sind die Gesamtoptionen zur Parametergenerierung noch einmal zusammengefasst dargestellt.

## Patentansprüche

1. Verfahren zur Generierung von Einstellparametern zum Einstellen von Dosier-und/oder Verteilorganen von landwirtschaftlichen Zentrifugalstreuern mit rotierend angetriebene und mit Wurfschaufeln besetzten Schleuderscheiben, denen über einstellbare und/oder gegenüber den Schleuderscheiben hinsichtlich der Aufgabefläche der auszubringenden Materialen, wie Düngemittel einstell-und/oder gegenüber den Schleuderscheiben verlagerbare Dosierorgane die zu verteilenden Materialien zuführbar sind, wobei zur Generierung der Einstellparameter eine Datenverarbeitungseinheit mit einer Dateneingabeeinrichtung und eine von einer externen Datenbank dort hinterlegte Einstellparameter für auszubringende Materialien abfragende Ferndatenübertragungseinrichtung vorhanden ist, wobei über die Ferndatenübertragungseinrichtung bei dem Vorhandensein von Einstellparametern für auszubringende Materialien diese an die Datenverarbeitungseinheit in geeigneter Weise übermittelt und mittels einer Anzeigevorrichtung zur Anzeige bringbar sind, **dadurch gekennzeichnet, dass** die Datenverarbeitungseinheit sich über die Ferndatenübertragungseinrichtung mittels einer User-ID in die Datenbank einloggt, dass in der Datenbank mit der User-ID versehene Einstellparameter für ein oder mehrere auszubringende Materialen hinterlegt sind, und dass auf der Anzeigevorrichtung die mit der abfragenden User-ID hinterlegten Materialien und/oder die zugehörigen Einstellparameter angezeigt werden.

2. Verfahren nach Anspruch 1, **dadurch gekennzeichnet, dass** bei Nichtvorhandensein von mit User-ID versehenen Einstellparametern von der externen Datenbank Einstellparameter für vergleichbare und/oder ähnliche zu verteilende Materialien auf der Anzeigevorrichtung angezeigt und zur Übernahme angeboten werden und durch Bestätigung durch den Bediener über die Ferndatenübertragungseinrichtung auf die Datenverarbeitungseinheit übernehmbar sind.

3. Verfahren nach zumindest einem der vorstehenden Ansprüche, **dadurch gekennzeichnet, dass** mittels der übermittelten Einstellparameter die Dosier-und/oder Verteilorganen des Zentrifugalstreuers automatisch von der Datenverarbeitungseinheit vorzugsweise durch Aktivierung der den Dosier-und/oder Verteilorganen zugeordneten Aktoren entsprechend den Einstellparametern einstellbar sind.

## Claims

1. Method for generating adjustment parameters for adjusting metering and/or distribution elements of agricultural centrifugal spreaders which have centrifugal discs which are driven so as to rotate, are fitted with throwing blades and to which the materials to be distributed can be supplied by means of metering elements which are adjustable and/or can be adjusted in relation to the centrifugal discs in respect of the application area of the materials to be applied, such as fertilizers, and/or can be displaced in relation to the centrifugal discs, wherein, in order to generate the adjustment parameters, a data processing unit, comprising a data input device, and a remote data transmission device, which checks adjustment parameters for materials to be applied, which adjustment parameters are stored by an external database, are provided, wherein, when adjustment parameters for materials to be applied are present, the said adjustment parameters are transmitted to the data processing unit in a suitable manner by means of the remote data transmission device and can be displayed by means of a display apparatus, **characterized in that** the data processing unit logs in the database by means of the remote data transmission device using a user ID that adjustment parameters which are provided with the user ID for one or more materials to be applied are stored in the database, and **in that** the materials stored with the checking user ID and/or the associated adjustment parameters are displayed on the display apparatus.

2. Method according to Claim 1, **characterized in that**, when adjustment parameters which are provided with a user ID are not present, adjustment parameters for comparable and/or similar materials to be distributed from the external database are displayed on the display apparatus and are offered and can be transferred to the data processing unit by means of the remote data transmission device by confirmation by the operator.

3. Method according to at least one of the preceding claims, **characterized in that**, using the transmitted adjustment parameters, the metering and/or distribution elements of the centrifugal spreader can be automatically adjusted by the data processing unit, preferably by activating the actuators which are associated with the metering and/or distribution elements in accordance with the adjustment parameters.

## Revendications

1. Procédé pour générer des paramètres de réglage permettant de régler des organes de dosage et/ou de distribution d'épandeurs centrifuges agricoles comportant des disques d'épandage entraînés en rotation et pourvus de palettes d'éjection auxquels peuvent être acheminés les matériaux à distribuer par l'intermédiaire d'organes de dosage pouvant être réglés et/ou déplacés par rapport aux disques d'épandage en ce qui concerne la surface de sortie des matériaux à distribuer, tels que des engrais, et pouvant être réglés et/ou déplacés par rapport aux disques d'épandage, dans lequel, pour générer les paramètres de réglage, il est prévu une unité de traitement de données comportant un dispositif d'entrée de données et un dispositif de transmission de données à distance demandant un paramètre de réglage stocké dans une base de données externe, destiné à des matériaux à distribuer, dans lequel ceux-ci sont transmis de manière appropriée à l'unité de traitement de données lors de la présence de paramètres de réglage pour les matériaux à distribuer par l'intermédiaire du dispositif de transmission de données à distance et peuvent être affichés au moyen d'un dispositif d'affichage, **caractérisé en ce que** l'unité de traitement de données se connecte à la base de données par l'intermédiaire du dispositif de transmission de données à distance au moyen d'un identifiant d'utilisateur, **en ce que** des paramètres de réglage associés à l'identifiant d'utilisateur et destinés à un ou plusieurs matériaux à distribuer sont stockés dans la base de données et **en ce que** les matériaux et/ou les paramètres de réglage stockés avec l'identifiant d'utilisateur sont affichés sur le dispositif d'affichage.

2. Procédé selon la revendication 1, **caractérisé en ce qu'**en l'absence de paramètres de réglage associés à un identifiant d'utilisateur, des paramètres de réglage de la base de données externe sont affichés sur le dispositif d'affichage pour des matériaux à distribuer comparables et/ou semblables ou sont proposés afin d'être repris et peuvent être repris par confirmation par l'utilisateur sur l'unité de traitement de données par l'intermédiaire du dispositif de transmission de données à distance.

3. Procédé selon au moins l'une des revendications précédentes, **caractérisé en ce que** les organes de dosage et/ou de distribution de l'épandeur centrifuge peuvent être réglés automatiquement au moyen des paramètres de réglage transmis, par l'unité de traitement de données, de préférence par activation des actionneurs associés aux organes de dosage et/ou de distribution, d'une manière qui correspond aux paramètres de réglage.
